# EUROPÄISCHE PATENTSCHRIFT

(11) **EP 0 677 176 B1**
(45) Veröffentlichungstag und Bekanntmachung des Hinweises auf die Patenterteilung: **22.07.1998**
(21) Anmeldenummer: 95900101.7
(22) Anmeldetag: 31.10.1994
(51) Int. Cl.: G02B 26/10

(54) **VORRICHTUNG ZUR ABLENKUNG OPTISCHER STRAHLEN**
DEVICE FOR DEFLECTING OPTICAL BEAMS
DISPOSITIF DE DEVIATION DE RAYONS OPTIQUES

(30) Priorität: 02.11.1993 DE 4337411; 03.02.1994 DE 4403297
(43) Veröffentlichungstag der Anmeldung: 18.10.1995
(73) Patentinhaber: Schwesinger, Norbert, D-98693 Ilmenau (DE); Heim, Ulf, D-98693 Ilmenau (DE); Wurmus, Helmut, D-98693 Ilmenau (DE)
(72) Erfinder: Schwesinger, Norbert, D-98693 Ilmenau (DE); Heim, Ulf, D-98693 Ilmenau (DE); Wurmus, Helmut, D-98693 Ilmenau (DE)
(74) Vertreter: Koch, Günther, Dipl.-Ing.
(86) Internationale Anmeldenummer: EP9403582
(87) Internationale Veröffentlichungsnummer: WO9512831

(56) Entgegenhaltungen:
- EP-A- 0 459 585
- DE-A- 3 312 595
- US-A- 5 042 887
- US-A- 5 170 278
- PATENT ABSTRACTS OF JAPAN vol. 16, no. 269 (C-952) 17. Juni 1992 & JP,A,04 065 393 (NIPPON TELEGR.) 2. März 1992

## Beschreibung

Die Erfindung betrifft eine Vorrichtung zur Ablenkung optischer Strahlen, vorzugsweise zur Ablenkung von Laserstrahlen, mit an einem antreibbaren Rotationskörper angeordneten Spiegelflächen.

Im Stand der Technik ist es bekannt, zur Realisierung der Ablenkung von Laserstrahlen, die eine kontinuierliche Strahlenablenkung für größere Winkel und hohe Ablenkgeschwindigkeit erfordern, rotatorisch angetriebene Polygonspiegel zu verwenden. Nachteilig ist dabei, daß der extreme Fertigungsaufwand dieser Spiegel zu außerordentlich hohen Kosten führt. Außerdem kann bei den bekannten Polygonspiegeln die Verkippungsfreiheit der einzelnen Spiegelsegmente bezüglich der Drehachse nicht gewährleistet werden.

Aus dem Gebiet der Mikrotechnik sind weiterhin Ablenkspiegelanordnungen für optische Strahlen bekannt, bei denen an Torsionsbändern aufgehängte Spiegelflächen um eine Drehachse kippen können oder bei denen die Spiegelflächen am Ende von beweglichen Zungenstrukturen angeordnet sind. Für derartige Systeme werden elektrostatische, piezoelektrische oder elektrothermische Antriebe eingesetzt, die generell mit der Mechanik funktionsintegriert sind.

Mit derartigen Anordnungen sind zwar Strahlablenkungen von ± 10° realisierbar, die zugehörigen Spiegelflächen sind jedoch nur im Bereich zwischen 50 x 50 µm² bis 500 x 500 µm² herstellbar. Als sehr problematisch erweist sich bei den bisher bekannten Systemen das dynamische Verhalten. Bei hohen Frequenzen nimmt der erreichbare Ablenkwinkel drastisch ab, da die zur beschleunigten Bewegung der Spiegelfläche notwendigen Kräfte durch die gewählten Antriebsprinzipien nicht mehr aufgebracht werden können. Es treten außerdem Schwingungsmodi auf, die zur Verwölbung der Spiegelflächen führen. Um eine sichere Bewegung der Spiegelflächen auch bei höheren Frequenzen zu ermöglichen, muß deren Masse drastisch reduziert werden, was bei gegebener Spiegelfläche nur durch eine Verringerung der Dicke möglich ist. Dies führt jedoch zu einer verstärkten Ausbildung von Schwingungen auf der Spiegeloberfläche und damit zu Funktionsstörungen.

Die Druckschrift Xerox Disclosure Journal, Volume 15, Number 3, May/June 1990 beschreibt eine Vorrichtung zur Ablenkung von optischen Strahlen mit einem drehbaren Polygonspiegel. Dieser Polygonspiegel kann u.a. durch anisotropes Ätzen von einkristallinem Silizium hergestellt werden.

Die US-A-4 938 551 beschreibt einen Bar-Code-Leser mit einem Polygonspiegel mit vertieft liegenden Spiegelflächen, der auf einem als Motor ausgebildeten Träger oder einem oszillierenden Träger montiert ist. Hierdurch sollen mehrere, in der Richtung unterschiedliche Abtastorte geschaffen werden, d.h. der Barcode soll in unterschiedlichen Richtungen abgetastet werden. Die Rotationsgeschwindigkeit eines solchen Bar-Code-Lesers ist relativ niedrig.

Die US-A-5 235 454 betrifft eine Vorrichtung zur Ablenkung eines Laserstrahls. Der Spiegel besitzt eine einzige Spiegeloberfläche und soll mit hoher Drehzahl angetrieben werden. Der den Spiegel tragende Rotor besteht aus einem scheibenartigen Grundkörper und wird durch eine elektrostatische Kraft angetrieben, die dadurch erzeugt wird, daß selektiv eine Spannung an Statorelektroden angelegt wird, über denen der Rotor berührungslos abläuft, wobei die axiale Abstützung des Rotors durch abstoßende Kraft von Permanentmagneten erfolgt, die im Achsbereich des Stators bzw. am Ende der Rotorwelle angeordnet sind. Die radiale Abstützung erfolgt durch einen Viskositätswiderstand der zwischen die radialen Lagerflächen eingeblasenen Luft.

Die US-PS 3 874 778 betrifft einen Drehspiegelscanner zur Ablenkung eines Lichtstrahls eines mechanisch angetriebenen Spiegels. Auch hier erfolgt die axiale Abstützung des Rotors berührungslos durch die abstoßenden Kräfte von Permanentmagneten, die im Stator bzw. Rotor angeordnet sind. Die radiale Abstützung erfolgt wiederum durch ein dynamisches Luftlager.

Die EP-A-459 585 betrifft eine Abtastvorrichtung mit einem rotierenden Spiegel, dessen Spiegelflächen rotationssymmetrisch angeordnet sind. Der Rotor besitzt einen scheibenartig wenigstens teilweise permanentmagnetischen Rotorkörper und der Antrieb weist weiter einen stationären Stator mit Spulen auf, die sich in das Magnetfeld des Rotorkörpers hineinerstrecken, um eine elektromagnetische Antriebskraft zu erzeugen, die auf den Rotorkörper einwirkt und den Spiegel dreht. Im Magnetfeld des Rotorkörpers sind weitere Spulen angeordnet, um elektromagnetische Lagerkräfte zu erzeugen, die auf den Rotorkörper einwirken und elektromagnetisch den drehbaren Rotor relativ zum Stator abstützen.

Der Erfindung liegt die Aufgabe zugrunde, eine Vorrichtung zur Ablenkung optischer Strahlen zu schaffen, die eine hohe Ablenkfrequenz bei großen Ablenkwinkeln und für große Spiegelflächen ermöglicht, eine Verkippungsfreiheit der Einzelsegmente bezüglich der Drehachse gewährleistet und kostengünstig hergestellt werden kann.

Gelöst wird die gestellte Aufgabe durch die Gesamtheit der im Patentanspruch 1 angegebenen Merkmale. Danach erfolgt sowohl die axiale als auch die radiale Abstützung auf magnetischem Wege, wobei diese magnetische Lagerung selbstzentrierend ist und einen reibungsfreien Lauf mit hohen Drehzahlen ermöglicht.

Ausgestaltungen der Erfindung ergeben sich aus den Unteransprüchen 2 bis 5.

Die erfindungsgemäße Anordnung zeichnet sich insbesondere durch folgende Vorteile aus:
- Verwirklichung hoher Ablenkfrequenzen auch für relativ große Lichtstrahldurchmesser,
- Herstellen der Spiegeloberflächen mit hoher Präzision,
- kostengünstige Herstellung in der Massenproduktion, da in der Mikromechanik die vorteilhaften Technologien der batch-Prozesse der Mikroelektronik genutzt werden können,
- Verkippungsfreiheit der Segmente zueinander,
- hohes Reflexionsvermögen der Spiegelflächen durch die vorgesehenen Materialien.

Die Erfindung wird im folgenden anhand von Ausführungsbeispielen näher erläutert. In der zugehörigen Zeichnung zeigen:
die Figuren 1 und 2 eine erfindungsgemäße Vorrichtung, bei der sich die Spiegelflächen am Rotationskörper in einer Vertiefung befinden,
   und
die Figuren 3 und 4 eine erfindungsgemäße Vorrichtung, bei der sich die Spiegelflächen an einer auf dem Rotationskörper angebrachten Mesastruktur befinden.

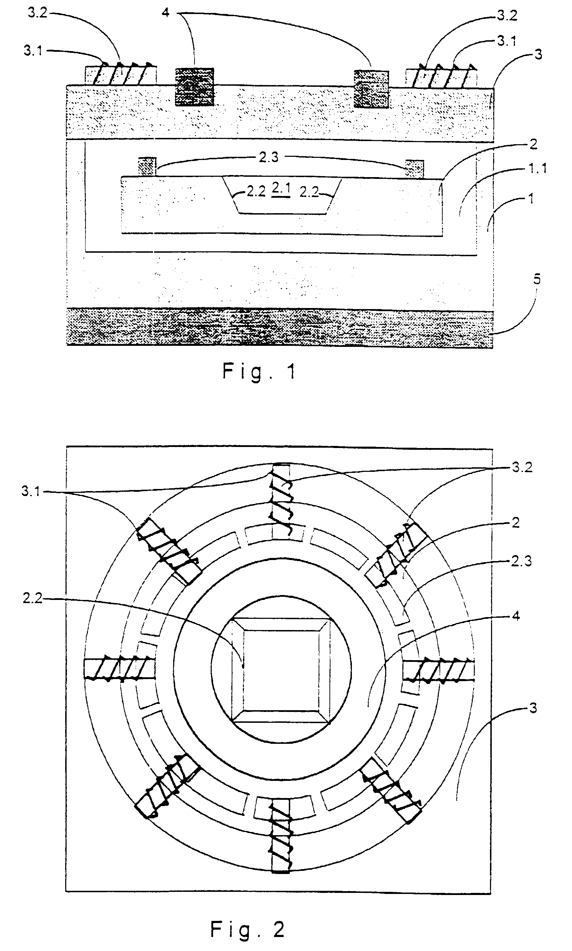

Bei der in den Figuren 1 und 2 dargestellten Anordnung enthält der Grundkörper 1 eine Aussparung 1.1, die in ihren Abmessungen größer als der scheibenförmige Rotationskörper 2 ist. Der Rotationskörper 2 besteht aus einem einkristallinen Material, vorzugsweise aus Silizium, und enthält eine zentrisch angeordnete polygonförmige Vertiefung 2.1. Die Vertiefung 2.1 wird durch Kristallebenen des Rotationskörpers 2 seitlich begrenzt, welche die Spiegelflächen 2.2 darstellen. Auf der Oberseite des Rotationskörpers 2 befindet sich eine ringförmige, segmentierte hartmagnetische Schicht 2.3, deren Zentrum die Drehachse des Rotationskörpers 2 definiert. Der Grundkörper 1, in dessen Aussparung 1.1 sich der Rotationskörper 2 befindet, wird an der Oberseite durch eine Deckplatte 3 aus Glas hermetisch abgeschlossen. Auf dieser Deckplatte befindet sich ein Ringmagnet 4 und eine Anzahl von Spulenpaaren 3.1 mit integrierten Flußleitstücken 3.2. An der Unterseite des Grundkörpers ist ein Gegenpolmagnet 5 angeordnet.

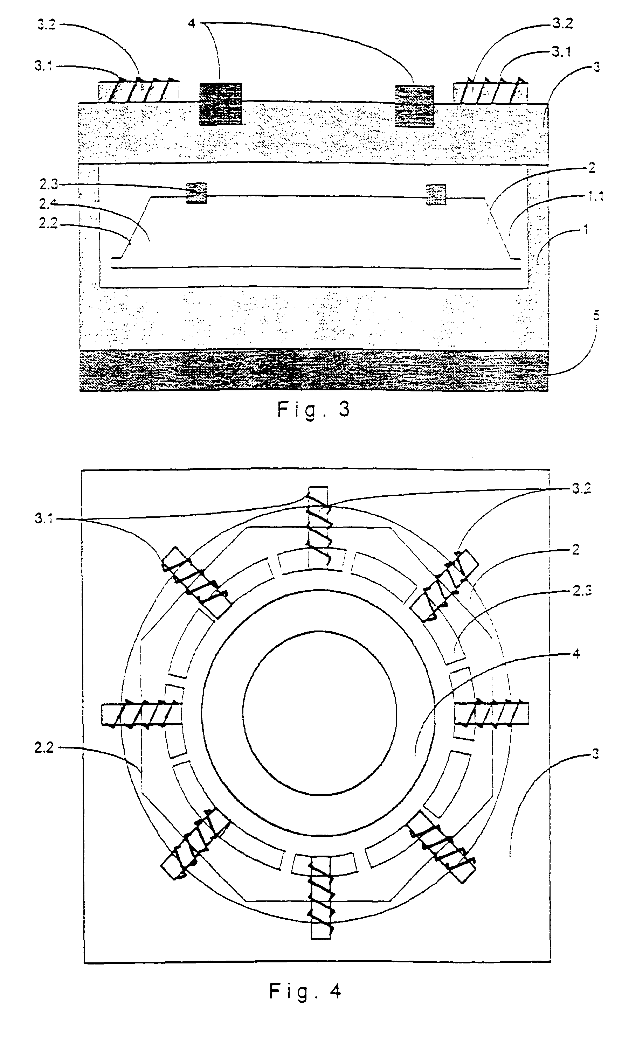

Eine weitere Ausführungsform der erfindungsgemäßen Vorrichtung zeigen die Figuren 3 und 4. Hierbei ist auf dem scheibenförmigen Rotationskörper 2 eine polyedrische Mesastruktur 2.4 zentrisch angeordnet. Die Mesastruktur 2.4 wird durch Kristallebenen des Rotationskörpers 2 seitlich begrenzt, welche die Spiegelflächen 2.2 darstellen. Auf der Oberseite des Rotationskörpers 2 befinden sich ringförmig angeordnete Hartmagnete 2.3, deren Zentrum die Drehachse des Rotationskörpers definiert. Der Grundkörper 1, in dessen Aussparung 1.1 sich der Rotationskörper 2 befindet, ist an seiner Oberseite wiederum durch eine Deckplatte 3 hermetisch abgeschlossen.

In beiden Ausführungen wird der Rotationskörper 2 durch die Segmente des hartmagnetischen Materials auf seiner Oberseite, durch die Kraft des Ringmagneten 4, des Gegenpolmagneten 5 sowie durch das Magnetfeld der Spulen 3.1 in der Aussparung des Grundkörpers 1 schwebend gehalten. Die ringförmige Ausbildung der Magnete erzwingt die Zentrierung des Rotationskörers 2 . Durch geeignete Ansteuerung der auf dem Grundkörper 1 angeordneten Spulenpaare 3.1 wird über die Flußleitschichten 3.2 ein magnetisches Feld erzeugt, das im Zusammenwirken mit den hartmagnetischen Segmenten auf dem Rotationskörper 2 ein Drehmoment bewirkt. Der Rotationskörper 2 kann dadurch bei einer Mehrpolanordnung in eine taumelfreie Rotationsbewegung versetzt werden. Ein auf eine Spiegelfläche 2.2 des Rotationskörpers 2 fallender Lichtstrahl kann durch die Drehbewegung der Spiegelfläche um eine Drehachse bis zu einem Winkel von ca. 60° abgelenkt werden. Die erfindungsgemäße Vorrichtung erlaubt sehr hohe Drehzahlen, weil durch das selbstzentrierende Magnetlager Reibungseffekte fast vollständig verhindert sowie Unwuchten minimiert werden können.

## Patentansprüche

1. Vorrichtung zur Ablenkung von optischen Strahlen, insbesondere von Laserstrahlen, mit den folgenden Merkmalen:
- in einer Aussparung (1.1) eines Grundkörpers (1) ist ein scheibenförmiger Rotationskörper (2) drehbar;
- die Aussparung (1.1) ist durch eine Deckplatte (3) abgeschlossen;
- der Rotationskörper (2) trägt in rotationssymmetrischer Anordnung Spiegelflächen (2.2);
- auf der Oberseite des Rotationskörpers (2) befinden sich in ringförmiger Anordnung hartmagnetische Segmente (2.3) deren Zentrum die Drehachse des Rotationskörpers (2) definiert;
- auf der Deckplatte (3) befindet sich mindestens ein Ringmagnet (4);
- unterhalb des Rotationskörpers (2) ist am Grundkörper (1) ein Gegenpolmagnet (5) angeordnet;
- auf der Deckplatte (3) sind Spulen (3.1) angeordnet, die bei geeigneter Ansteuerung ein magnetisches Feld erzeugen, das im Zusammenwirken mit dem Feld der hartmagnetischen Segmente (2.3) auf den Rotationskörper (2) ein Drehmoment ausübt und diesen im Zusammenwirken mit dem Feld der Ringmagneten (4) und dem Feld der Gegenpolmagneten (5) in der Aussparung (1.1) freischwebend hält.

2. Vorrichtung nach Anspruch 1,
dadurch gekennzeichnet, daß der Rotationskörper (2) eine zentrische Vertiefung (2.1) aufweist, in der sich die Spiegelflächen (2.2) befinden.

3. Vorrichtung nach Anspruch 1,
dadurch gekennzeichnet, daß der Rotationskörper (2) aus einkristallinem Material besteht.

4. Vorrichtung nach Anspruch 3,
dadurch gekennzeichnet, daß an dem einkristallinen Rotationskörper (2) zentrisch eine polyedrische Mesastruktur (2.4) angeordnet ist, deren Seitenflächen die Spiegelflächen bilden.

5. Vorrichtung nach Anspruch 1,
dadurch gekennzeichnet, daß die Spulen (3.1) mit integrierten Flußleitstücken (3.2) ausgerüstet sind.

## Claims

1. Apparatus for deflecting optical beams, more particularly laser beams, having the following features:
- a disc-shaped body of revolution (2) is adapted to rotate in a recess (1.1) set in a basic structure (1);
- the recess (1.1) is sealed by a cover plate (3);
- the body of revolution (2) carries reflector surfaces (2.2) disposed symmetrically with respect to rotation;
- located on the upper face of the body of revolution (2) is a ring-shaped arrangement of magnetically hard segments (2.3) whose centre defines the rotational axis of the body of revolution (2);
- at least one ring magnet (4) is located on the cover plate (3);
- beneath the body of revolution (2) there is arranged a reciprocal pole magnet (5) on the basic structure (1);
- arranged on the cover plate (3) are coils (3.1) which when suitably activated generate a magnetic field which in cooperation with the field of the magnetically hard segments (2.3) exerts a torque on the body of revolution (2) and in cooperation with the field of the ring magnet (4) and the field of the reciprocal pole magnet (5) holds the body of revolution (2) levitated in the recess (1.1).

2. Apparatus according to claim 1,
characterised in that the body of revolution (2) features a central depression (2.1) in which the reflector surfaces (2.2) are located.

3. Apparatus according to claim 1,
characterised in that the body of revolution (2) consists of single-crystal material.

4. Apparatus according to claim 3,
characterised in that centrally disposed on the single-crystal body of revolution (2) is a polyhedral mesa structure (2.4) whose lateral surfaces form the reflector surfaces.

5. Apparatus according to claim 1,
characterised in that the coils (3.1) are equipped with integrated flux concentrating pieces (3.2).

## Revendications

1. Dispositif de déviation de rayons optiques, notamment de rayons laser, présentant les caractéristiques suivantes:
- un corps de révolution (2) en forme de disque est monté tournant dans un évidement (1.1) d'un corps de base (1);
- l'évidement (1.1) est fermé par une plaque de couverture (3);
- le corps de révolution (2) porte des surfaces réfléchissantes (2.2) en un agencement symétrique de rotation;
- sur la face supérieure du corps de révolution (2) se trouvent des segments (2.3) magnétiques durs disposés en anneaux, dont le centre définit l'axe de rotation du corps de révolution (2);
- sur la plaque de couverture (3) se trouve au moins un aimant annulaire (4);
- au-dessous du corps de révolution (2), un aimant à pôles opposés (5) est disposé sur le corps de base (1);
- sur la plaque de couverture (3) sont disposées des bobines (3.1) qui, lorsqu'elles sont soumises à une excitation appropriée, produisent un champ magnétique qui, en coopération avec le champ des segments magnétiques durs (2.3), exerce un couple sur le corps de révolution (2) et maintiennent celui-ci flottant dans l'évidement (1.1) en coopération avec le champ des segments magnétiques (4) et le champ des aimants à pôles opposés (5).

2. Dispositif selon la revendication 1, caractérisé par le fait que le corps de révolution (2) présente un évidement central (2.1) dans lequel se trouvent les surfaces réfléchissantes (2.2)

3. Dispositif selon la revendication 1, caractérisé par le fait que le corps de révolution est formé d'un matériau monocristal.

4. Dispositif selon la revendication 3, caractérisé par le fait que sur le corps de révolution monocristal est disposée une structure mésa polyédrique (2.4) dont les surfaces latérales forment les surfaces réfléchissantes.

5. Dispositif selon la revendication 1, caractérisé par le fait que les bobines (3.1) sont munies d'éléments de guidage de flux (3.2) intégrés.
